# EUROPEAN PATENT SPECIFICATION

(11) **EP 1 638 835 B1**
(45) Date of publication and mention of the grant of the patent: **14.05.2008**
(21) Application number: 04743837.9
(22) Date of filing: 14.06.2004
(51) Int. Cl.: B62K 15/00

(54) **FOLDING BICYCLE APPARATUS AND METHOD**
KLAPPFAHRRADVORRICHTUNG UND -VERFAHREN
METHODE ET APPAREIL FORMANT UNE BICYCLETTE PLIABLE

(30) Priority: 12.06.2003 US 461017
(43) Date of publication of application: 29.03.2006
(73) Proprietor: Studio Moderna SA, 6900 Lugano (CH)
(72) Inventor: MIHELIC, Miko, 1356 Dobrova (SI)
(74) Representative: Franzolin, Luigi
(86) International application number: PCT/IB2004/002169
(87) International publication number: WO 2004/110852

(56) References cited:
- DE-A- 4 313 832
- DE-U- 20 300 031
- FR-A- 1 011 990
- GB-A- 2 373 770
- PATENT ABSTRACTS OF JAPAN vol. 1999, no. 04, 30 April 1999 (1999-04-30) -& JP 11 005582 A (KANTO AUTO WORKS LTD), 12 January 1999 (1999-01-12)

## Description

This application is a continuation-in-part of co-pending U.S. Patent Application Serial No. 10/461,017, filed June 12, 2003, and entitled "Folding Bicycle" and PCT International Patent Application No. PCT/IB03/01243, filed on March 3, 2003, and entitled, "Folding Bicycle", both of which are incorporated herein by reference.

### Field Of The Invention

The present invention generally relates to folding bicycles that can be folded into a relatively compact arrangement, and unfolded for riding.

### Background Of The Invention

Bicycles that can be folded have an advantage of a relatively compact arrangement for storage or transport, making them popular with users wishing to reduce storage space, such as commuters, recreation enthusiasts, and campers, among others. Known folding bicycles have a myriad of shortcomings when compared with standard non-folding bicycles. For example, known folding bicycles have a frame of two or more pieces, which can be dismantled, folded or telescopically shortened. In some known folding bicycles, the folded dimensions can be further reduced via removal of their wheels.

In some conventional bicycle folding joints are situated in the central area of the frame, such as within one or more of the down tube, top tube, seat tube and head tube, or bearing tube. A disadvantage of such an arrangement is that the frame's rigidity is reduced, which can detrimentally affect pedaling efficiency, and overall stability.

Another disadvantage associated with such known folding bicycles is that the joints that enable folding can develop a gap, or "play" over a period of usage. This play results in a bicycle that flexes, reducing pedaling efficiency, as the force applied to propel the bicycle is partially absorbed by the flexing joints. In addition, the joints themselves can be weak points in the bicycle, and can cause structural failure, instability or other undesirable riding characteristics.

A further disadvantage is that known folding bicycles have frames that frequently are smaller than the frames of a comparable standard non-folding bicycle. This reduces the ergonomic suitability for a rider. A result of this for many riders is a decrease of the distance that can be ridden with comfort. Riding discomfort can decrease pedaling efficiency, and decrease riding characteristics are less favorable due to the different position of front wheel and smaller wheel size compared to the non-folding bicycles.

DE 203 00 031 U discloses a folding bicycle in accordance with the preamble of claim 1. This bicycle does not solve the aforesaid problems concerning comfort and pedaling efficiency due to the pedal axle located at the downtube.

Therefore, there exists a need for a folding bicycle that is ergonomically comfortable when riding, optionally has a unitary central frame structure, optionally can be readily folded into a compact arrangement, and/or optionally can maintain its structural rigidity and integrity despite repeated folding and unfolding.

This object is attained by a folding bicycle according to claim 1.

The present invention alleviates to a great extent the disadvantages of known folding bicycles, some of which are discussed above, by providing a bicycle that is foldable into a compact size, while still having a central frame without any folding joints. The foldable bicycle of the present invention, preferably is foldable while generally providing a riding experience and durability of a standard non-folding bicycle.

One embodiment of the present invention includes a central frame assembly of a down tube, a seat tube, a top tube and a bearing tube, wherein the down tube, seat tube, top tube and bearing tube are substantially fixed relative to each other. This arrangement can promote ergonomic riding characteristics of a non-folding bicycle.

The foldable elements of present invention optionally include a foldable front-fork assembly, a foldable rear-wheel assembly and a foldable handlebar assembly. Although each of these assemblies are optional features of the present invention, they operate together to reduce the folded size of the foldable bicycle, rendering it for example more easily transportable. The optional front-fork assembly mounts the front wheel on its lower end, and is jointed at or near a connector strut. In operation, the front fork assembly includes linking bars connecting the upper end at the frame with the wheel, at its axle. The joint can be operated to unlock and allow the front fork assembly to rotate about the joint, in the direction of the down tube assembly of the frame. The down tube of the frame preferably has two spatially separated portions spaced apart from one another. So, when the front fork assembly is rotated about the joint, the wheel can fold into the area between the separated portions, thereby rotating into the center of the frame, through the two spaced apart portions of the down tube. Alternatively, the wheel and front fork assembly can be rotated 180° prior to being folded about the joint.

The optional handlebar assembly also serves to reduce the folded dimension of the foldable bicycle. In particular, the handlebars are mounted to a tube in a locked, but unlockable fashion. When it is desired to fold the bicycle, the handlebars are unlocked, and rotated downwards, preferably to a position that is within the area of the central portion of the frame. In a preferred embodiment, the handlebars are fully turned 180° prior to folding, and the handlebars are then unlocked and rotated downwards to a position in which one handle grip is on the left side of the central portion of the frame, and another handle grip is on the right side of the central portion of the frame. Then, using a lockable joint, the respective handlebars can be folded inwards towards each other, and can be folded inwards a sufficient amount so that the handle grips cross one another.

The optional rear wheel assembly also serves to further reduce the folded dimension of the foldable bicycle. In this embodiment, a strut assembly descends at an angle from beneath the seat to the rear wheel axle. Preferably the strut assembly includes spatially separated, or parallel, bars, between which the rear wheel is mounted. At a location between the seat and the rear wheel axle, the strut assembly includes a locking assembly. When the locking assembly is released, the rear wheel rotates upwards, between the spatially separated bars of the strut assembly. In a preferred embodiment, the compactness of this arrangement can be enhanced by using dual transmission chains, with an intermediate sprocket. The chain stays, together with the rear wheel, are foldable upwards toward the seat. To facilitate the folding of the chain stays and the rear wheel, the transmission from the chainring to the sprocket is complemented by two sprockets and a shaft, i.e. consists two chains in series, which results in an additional transmission ratio. The shaft also serves as a pivot, around which the chain stays and the rear wheel fold. The front chain remains between the front chainring and the intermediate sprocket, on the shaft, while the rear chain remains between the intermediate sprocket and the rear sprocket, and shifts upwards together with the chain stays and the rear wheel without changing the distance between the front sprocket and the rear sprocket. In this embodiment, the rear wheel is rotated about the intermediate sprocket when folding the wheel upwards. The chain stays, together with the rear wheel, is foldable upwards toward the seat. In riding position, power is transmitted via a chain from a pedal sprocket to the intermediate sprocket and then via a second chain from the intermediate sprocket to a rear wheel sprocket mounted at the rear wheel axle. If the rear wheel is removed, the length of the bicycle can be further reduced in the folded position.

To reduce the width of the folded bicycle, the pedals can also be folded.

According to one embodiment, ratios of distances between and among various locations of the bicycle are within predetermined ranges providing examples of configurations providing relatively more stable foldable bicycles and thus a more comfortable and smoother ride. It should be understood that although ranges of ratios are provided for examples of embodiments, foldable bicycles in accordance with the present invention optionally can have ratios within or outside of the ranges provided.

In an alternate embodiment of the present invention, a foldable tandem bicycle is provided. In this arrangement, a second seat is situated behind the front seat, and a second set of pedals is provided. In the tandem arrangement, a second set of pedals is not necessarily required. For example, footrests can be added at any suitable position for receiving a second passenger's feet, but preferably in a location safely away from operative components or the first pedals. In addition, as an alternative to the second seat, or in addition to the second seat, other optional components can be added, such as a child seat, basket, briefcase holder, rack, etc. Such components can be attached in a similar fashion and location as the second seat.

In a further embodiment, the bicycle can be equipped with a motor providing torque at one of the sprockets or the chainring.

These and other features and advantages of the present invention will be appreciated from review of the following detailed description of the invention, along with the accompanying figures in which like reference numerals refer to like parts throughout.

### Brief Description Of The Drawings

FIG. 1 is a side view of an embodiment of a foldable bicycle in accordance with the present invention;
FIG. 2 is a side view of a second embodiment of the foldable bicycle in accordance with the present invention, namely a tandem foldable bicycle;
FIG. 3 is a detail view of the embodiment illustrated in FIG. 2, showing a second seat tube, in accordance with the present invention;
FIG. 4 is a side view of the embodiment illustrated in FIG. 1, illustrating the foldable bicycle in accordance with the present invention in a folded configuration;
FIG. 5 is a detail view of the embodiment illustrated in FIG. 2, showing the foldable handlebar assembly, in accordance with the present invention;
FIG. 6 is a detail, view of the embodiment illustrated in FIG. 5, showing the foldable handlebar assembly in a folded configuration, in accordance with the present invention;
FIG. 7 is a detail view of the embodiment illustrated in FIG. 2, showing the foldable front fork assembly in a partially-folded configuration, in accordance with the present invention;
FIG. 8 is a detail view of the embodiment illustrated in FIG. 7, showing the front fork assembly in a completely folded configuration, in accordance with the present invention;
FIG. 9 is a detail view of the embodiment illustrated in FIG. 2, showing the foldable rear wheel assembly, in accordance with the present invention;
FIG. 10 is a detail view of the embodiment illustrated in FIG. 9, showing the rear wheel assembly in a partially-folded configuration, in accordance with the present invention.
FIG. 11 is a detail view of a sprocket arrangement of the foldable bicycle in accordance with the present invention;
FIG. 12 is a cross-sectional detail view of a sprocket arrangement of the foldable bicycle in accordance with the present invention as shown in FIG. 11;
FIG. 13 is a side view of an embodiment of a foldable bicycle in accordance with the present invention;
FIG. 14 is a side view of the embodiment illustrated in FIG. 13, illustrating the foldable bicycle in accordance with the present invention in a partially folded configuration;
FIG. 15 is a side view of an embodiment of a foldable bicycle in accordance with the present invention;
FTG. 16 is a side view of an embodiment of a foldable bicycle in accordance with the present invention;
FIG. 17 is a side view of a motorized embodiment of a foldable bicycle, in accordance with the present invention;
FIG. 18 is a side view of a tandem foldable bicycle in accordance with the present invention;
FIG. 19 is a perspective view of a pedal in accordance with the present invention;
FIG. 20 is a perspective view of a pedal in accordance with the present invention;
FIG. 21 is a top perspective view of an embodiment of a foldable bicycle in accordance with the present invention;
FIG. 22 is a side view of an embodiment of a foldable bicycle in a folded position in accordance with the present invention;
FIG. 23 is a side view of an embodiment of a foldable bicycle in a folded position in accordance with the present invention;
FIG. 24 is a side view of an embodiment of a foldable bicycle in accordance with the present invention;
FIG. 25 is a front view of a handlebar of a foldable bicycle in accordance with the present invention;
FIG. 26 is a side view of a portion of a frame of a foldable bicycle in accordance with the present invention;
FIG. 27 is a top view of top tubes of a foldable bicycle in accordance with the present invention;
FIG. 28 is a top view of down tubes and a front portion of bottom bracket tubes of a foldable bicycle in accordance with the present invention;
FIG. 29 is a side view of a portion of a foldable front-fork assembly of a foldable bicycle in accordance with the present invention;
FIG. 30 is a front view of handlebar elements of a foldable bicycle in accordance with the present invention;
FIG. 31 is a detail of a handlebar assembly of a foldable bicycle in accordance with the present invention;
FIG. 32 is a detail of a handlebar assembly of a foldable bicycle in accordance with the present invention; and
It will be recognized that some or all of the Figures are schematic representations for purposes of illustration and do not necessarily depict the actual relative sizes or locations of the elements shown.

### Detailed Description Of The Invention

In the following paragraphs, the present invention will be described in detail by way of example with reference to the attached drawings. Throughout this description, the preferred embodiment and examples shown should be considered as exemplars, rather than as limitations on the present invention. As used herein, the "present invention" refers to any one of the embodiments of the invention described herein, and any equivalents. Furthermore, reference to various feature(s) of the "present invention" throughout this document does not mean that all claimed embodiments or methods must include the referenced feature(s).

The present invention relates to a foldable bicycle including a frame geometry providing various components in the same relation to one another both in the folded and unfolded conditions. As defined herein "frame geometry" refers to the arrangement of tubes that make up the bicycle frame. The relationship between the tubes comprising the bicycle frame creates a specific overall "frame geometry." One feature of the foldable bicycle of the present invention is that the frame core preferably is of a unitary construction, i.e. containing no joints connecting moving parts.

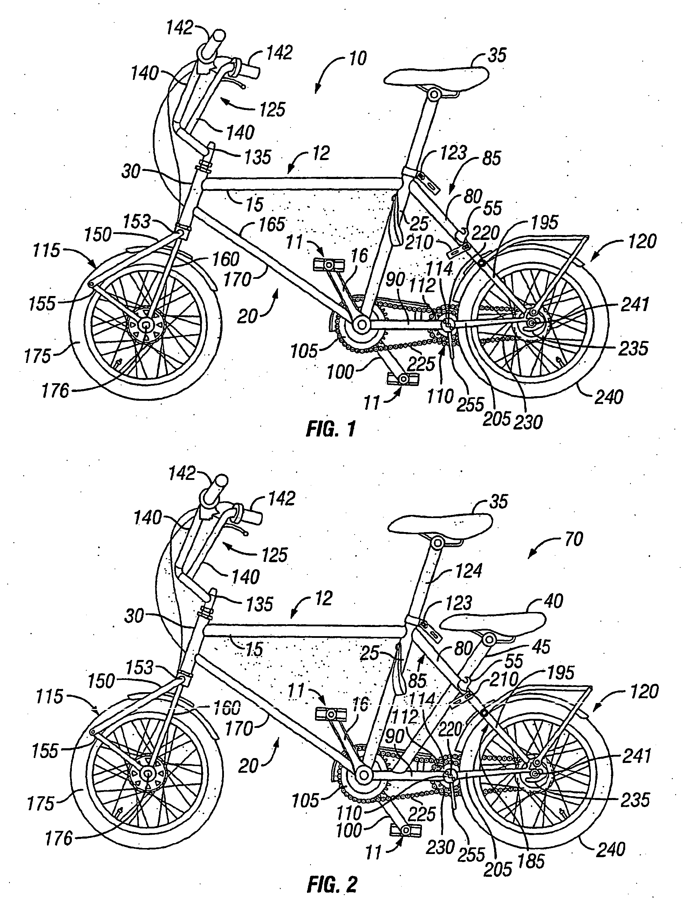

Referring to FIGS. 1, 13 and 15, one embodiment of a foldable bicycle 10 of the present invention is illustrated. This embodiment of the present invention comprises a core frame assembly 12 including a single down tube 20 or preferably including spatially separated down tubes 165, 170, a seat tube 25, a top tube 15 and a bearing tube 30, wherein the down tube 20, seat tube 25, top tube 15 and bearing tube 30 are in substantially fixed relation to each other. The downtubes 165, 170 preferably have a gap between them, which is approximately the same width as the front wheel 175, or slightly wider. The downtubes 165, 170 can be parallel to one another, angled, or curved. Alternatively, a single downtube having a curve is provided, or a single tube, split in the middle is provided, also shaped to accommodate the front wheel when it is folded upwards.

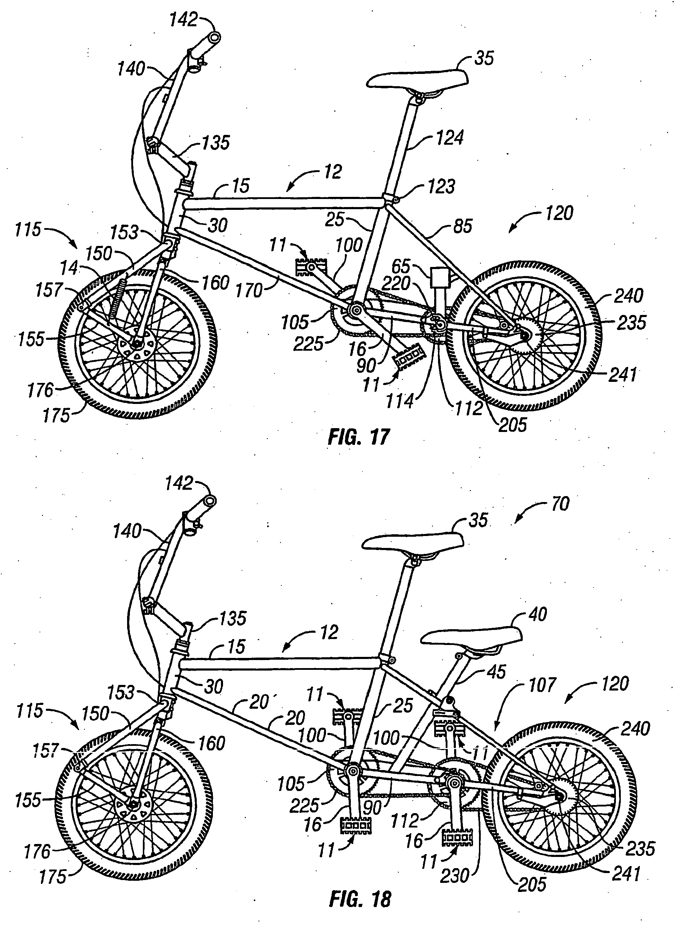

A second embodiment of the present invention is illustrated in FIGS. 2 and 18. In this embodiment, a tandem foldable bicycle 70 is provided. This embodiment includes various features found in the single seat embodiment 10, including the core frame assembly of a down tube 20 or spatially separated downtubes 165, 170, a seat tube 25, a top tube 15 and a bearing tube 30, wherein the down tubes 165, 170, seat tube 25, top tube 15 and bearing tube 30 are substantially fixed relative to each other. Referring to FIGS. 2, 3 and 18, the tandem foldable bicycle 70 includes a second seat tube 45 with a second seat 40 and a second seat tube fastener 50. Preferably, the second seat tube fastener 50 is a quick-release fastener, but other types of fasteners may be employed, such as latches, locks, and suitable nut-and-bolt arrangements.

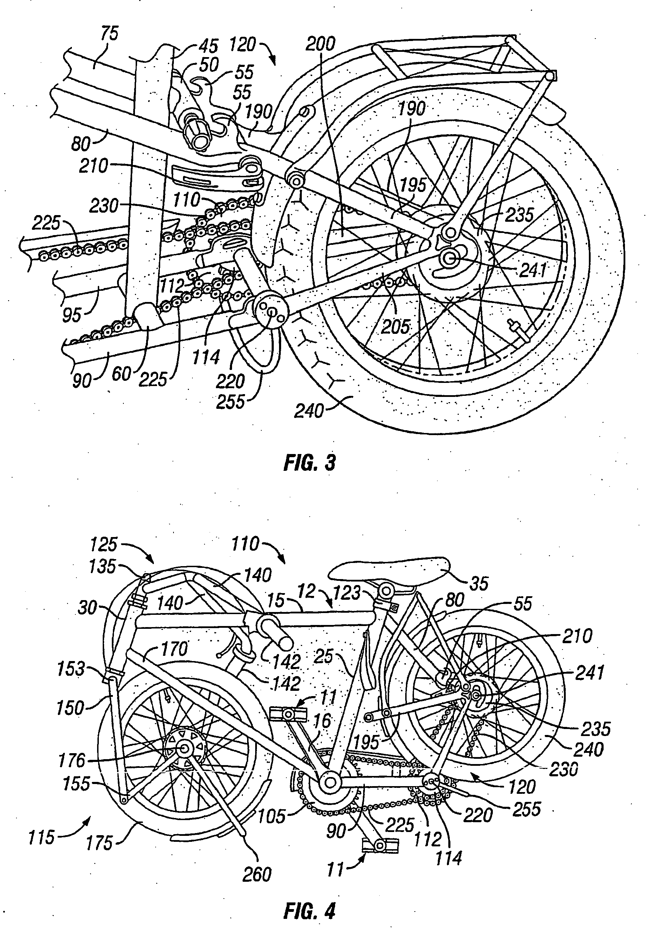

Optionally, a single seat bicycle can be converted to a tandem folding bicycle, by positioning the second seat tube 45 between the two upper seat stay tubes 75, 80 that comprise the upper seat stay 85. Attached to the upper seat stay 85 is the second seat tube fastener receiver 55, which is sized to receive the second seat tube fastener 50. The bottom end of the second seat tube 45 is positioned against the second seat tube support 60, located between the two forward bottom bracket tubes 90, 95, shown in FIG. 3. In this fashion, the foldable bicycle 10 can be converted into a tandem foldable bicycle 70 without changing the fame dimensions, or the bicycle wheelbase.

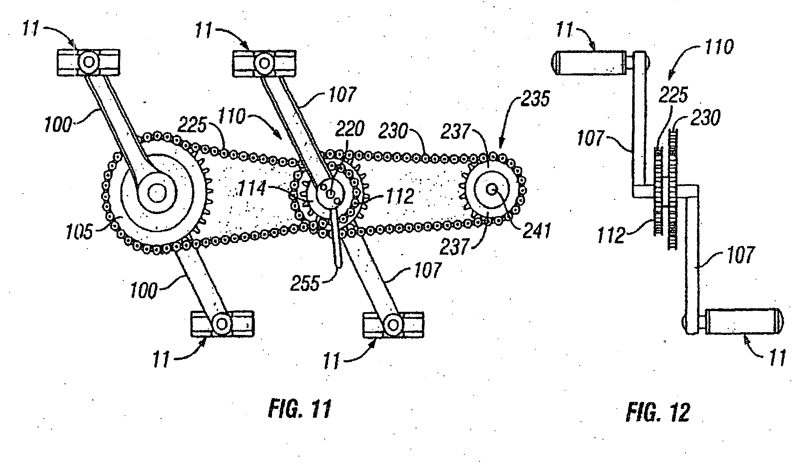

Referring now to FIG. 18, the tandem foldable bicycle 70 optionally may include a second pedal assembly 107 that is coupled with middle sprocket assembly 110. As depicted in FIGS. 11 and 18, preferably the second pedal assembly 107 is aligned in the same angular position as the first pedal assembly 100. Alternatively, a pair of footrests (not shown) may be mounted anywhere on the frame where appropriate, safe and convenient, such as on the two forward bottom bracket tubes 90, 95.

In a further embodiment of the tandem bicycle, the second seat 40 is positioned so that a passenger in the seat 40 can face backwards. Optional footrests may be provided to allow a comfortable resting place for the rear-facing passenger's seat. Likewise the seat 40, whether front or rear facing may include amenities such as a backrest enhancing passenger comfort.

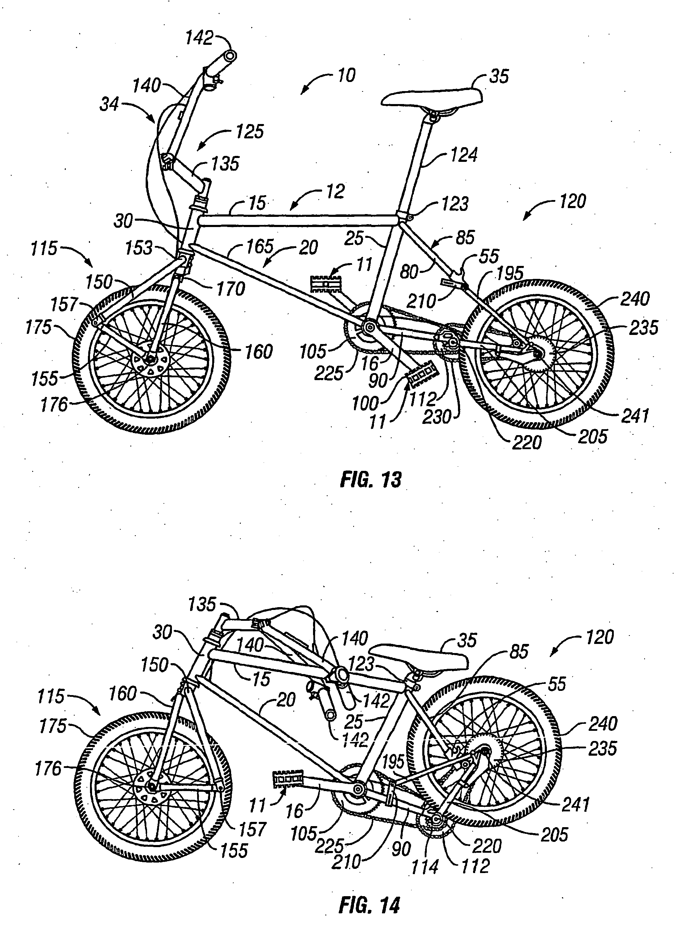

Referring to FIGS. 4 and 14, the foldable bicycle 10 of the present invention is illustrated in a folded configuration. Various optional folding features are illustrated in the figures. In the illustrated embodiment in FIGS. 1, 4, 13 and 15, the optional folding elements include foldable front-fork assembly 115, a foldable rear-wheel assembly 120 and a foldable handlebar assembly 125. In addition, the seat 35 optionally can be retracted into the seat tube 25 by releasing seat lock 123 enabling the seat mounting tube 124 to be slid into the seat tube 25. So, preferably, the seat mounting tube 124 has a smaller diameter than that of seat tube 25, enabling the seat mounting tube 124 to move within seat tube 25.

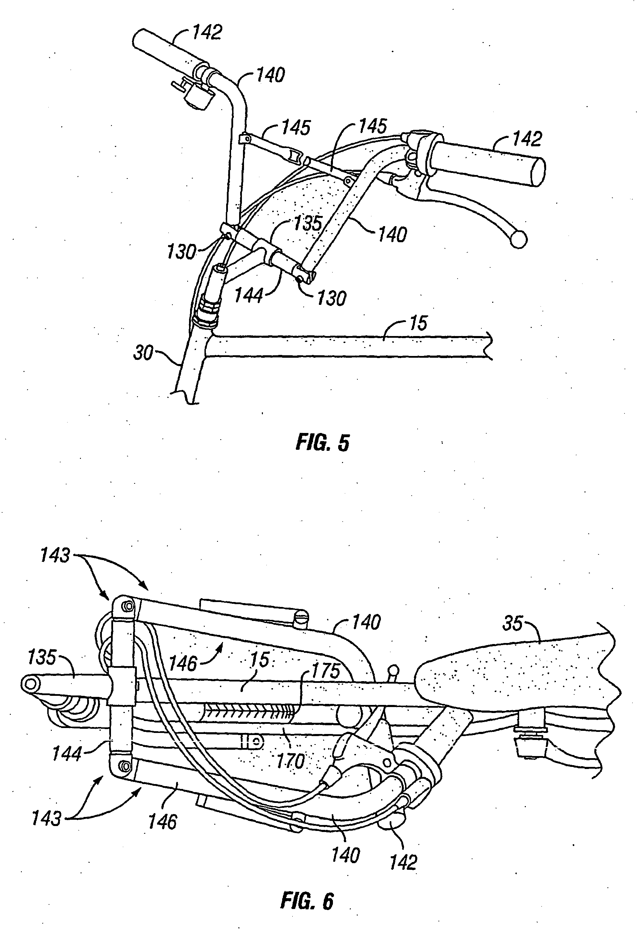

As shown in FIGS. 5 and 6, the foldable handlebar assembly 125 comprises a mounting member 135, also called a gooseneck, that is rotatably coupled with the bearing tube 30 (also called a head tube). The handlebars 140 are mounted to the mounting member 135 about handlebar pivot axes 130. Preferably the handlebars 140 can be rotated from an upright position as illustrated in FIGS. 1, 2 and 5 for example, to a folded downwards position as illustrated in FIGS. 3, 4 and 6. Any mechanism can be used that enables the handlebars 140 to be upright in a riding position and sufficiently fixed so as to allow safe steering, and then releasable and rotated downwards in a folded configuration of the bicycle 10, 70. In one embodiment, there is a friction fit between the handlebar tube and the mounting member 135, which is suitably shaped to receive the handlebar tube. In another embodiment, a latching mechanism is provided, and in another a ratchet mechanism is provided. The handlebar elements 140, can include tubing, and at their respective ends, handles 142.

In one embodiment, the respective handlebar elements 140 can be folded inwards as well, in order to further decrease the folded size of the bicycle. In this embodiment, handlebar pivot axes 130 are provided at the intersection of the handlebars 140 and the mounting member 135. One embodiment handlebar latch 145, that releases the handlebar elements 140, is a hook-and-loop type, but other type of latches may be employed, such as a quick-release latch, or any other type of suitable latch or fastener.

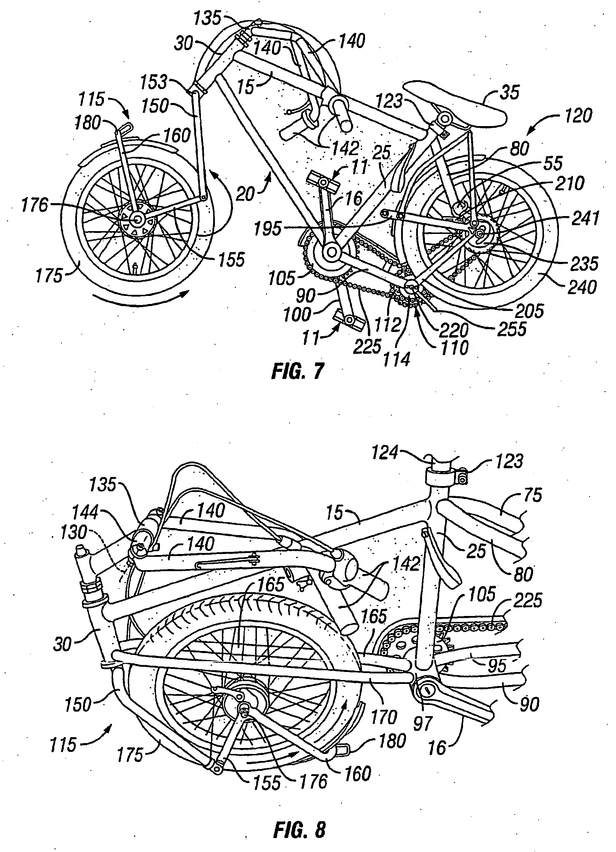

Referring now to FIGS. 6, 7 and 8, a preferred method of folding the handlebar assembly 125 will now be described. Preferably, the entire handlebar assembly 125 (along with the front wheel 175) is rotated around approximately 180 degrees so that the entire assembly is in a backwards orientation. In order to achieve this rotation, the mounting member 135 is rotated as desired within the bearing tube 30. This rotating force is transmitted to the front wheel 175 via its associated mounting elements. After this initial rotation, then the handlebar latch 145 is released allowing each handlebar tube 140, along with its associated elements, to be rotated about their own handlebar pivot axes 130. In one embodiment of the present invention, one handlebar pivot axis 130 is angled at 45 degrees and the other handlebar pivot axis 130 is angled at 35 degrees so that the handles 142 mounted at the ends of the handlebar tubes 140 do not contact each other when in the folded position underneath the top tube 15, as shown in FIGS. 6 and 8. Of course it should be appreciated that other angles of the handlebar pivot axes may be used depending on the particular frame construction used. So, in another example the angles are higher or lower by 5 degrees and in another example they are higher or lower by 8 degrees, i.e. angles of 50 and 40 degrees respectively may be selected, or 53 and 43 degrees, among other combinations. Generally speaking, it is preferred, although not required that the pivot axes of the left and right handle bars be at least 5 degrees different, although differences of 2-3 degrees for example also may be selected.

Referring again to FIGS. 7 and 8, the front fork assembly 115 is illustrated. In a riding configuration as illustrated in FIG. 1, the front fork assembly 115 mounts the front wheel 175 via an axle to the frame 12. It should be recognized that any arrangement of elements of the front fork assembly 115 can be used that rotatably mounts the front wheel 115, and optionally allows the front wheel to be moved towards the frame 12 in a folding operation. In the illustrated embodiment, the front fork assembly 115 is pivotally attached to the bearing tube 30 of the frame 12. It includes a front fork 150 that extends forward when the foldable bicycle 10 is arranged in a riding configuration, as shown in FIG. 1. Pivotally attached to the front fork 150, about fork pivot axis 157 is a swing arm 155 that has a front wheel 175 removeably and rotatably coupled thereto. Fixedly attached to the swing arm 155 is a stirrup 160 that includes a stirrup latch 180. Both the swing arm 155 and the stirrup 160 are positioned about the front wheel 175.

In a preferred embodiment the stirrup latch 180 is a spring lock, but other types of latches and fasteners, such as hook-and-loop, or quick-release fasteners may be employed. The front fork assembly 115 is folded by rotating the front fork 150 approximately 180 degrees. The stirrup latch 180 is then released, freeing the stirrup 160, and allowing the rider to rotate the swing arm 155 and stirrup 160 about the fork pivot axis 157, as shown in FIGS. 7 and 8.

Examples of folded configurations are illustrated in FIGS. 4 and 8. In a folded configuration, the front wheel 175 is moved towards the frame. Preferably it is positioned between the two down tube elements 165, 170 comprising the down tube 20.

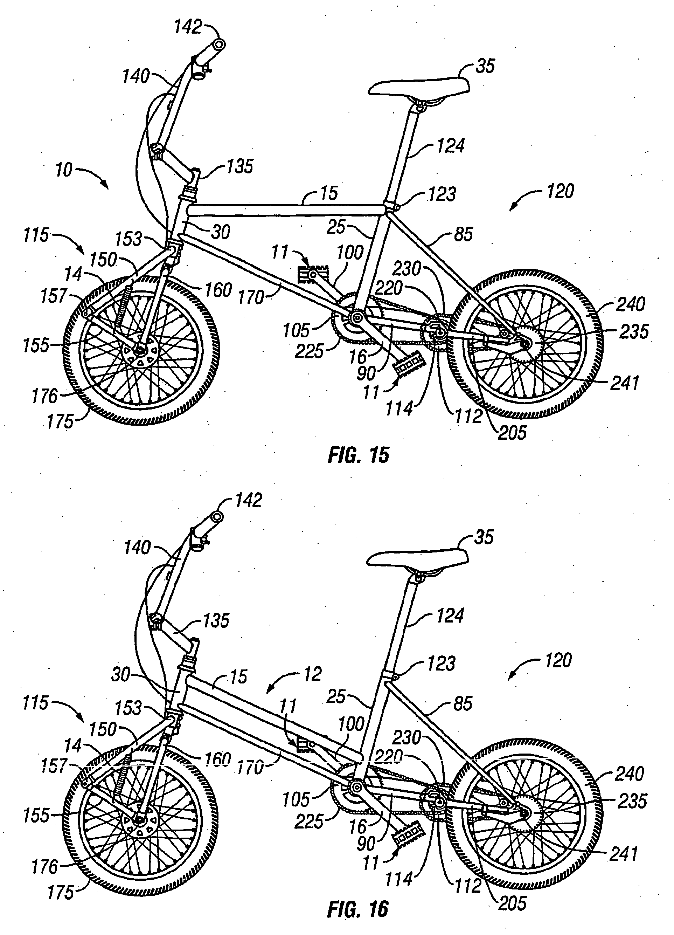

An alternative embodiment front fork assembly 115 may include two springs or shock absorbers 14, as shown in FIGS. 15, 16, and 17, that are mounted between the front fork 150 and either the stirrup 160 and/or the swing arm 155. The two springs or shock absorbers 14 would secure the stirrup latch 180 in the closed position when the foldable bicycle 10 is configured in the riding mode. The springs or shock absorbers 14 may be of any type, such as an elastomer type, hydraulic or pneumatic. It will be appreciated that one, or more springs or shock absorbers 14 may be mounted anywhere within the front fork assembly 115, in any suitable location.

One feature of the foldable front fork assembly 115 is that the "head angle" of the bearing tube can be configured similar to the head angle of a non-folding bicycle. The head angle determines the front fork rake angle, which affects steering "quickness." That is, the steering of the present invention will feel normal to a rider accustomed to a non-folding bicycle, in contrast to conventional folding bicycles, that have a steeper head angle, which results in a steep front fork rake angle. This can be implemented to create relatively quick steering, resulting in a nervous, or edgy steering feel as desired.

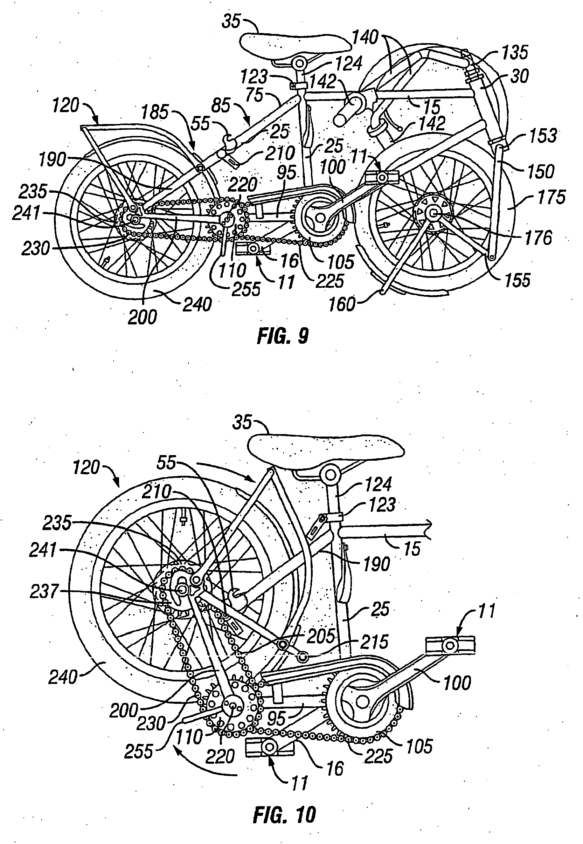

An optional rear wheel assembly 120 also is provided. Any assembly may be used that is suitable for mounting the rear wheel rotatably with respect to the frame 12, and for mounting as desired one or more seat assemblies. In the illustrated embodiment, the seat stay is divided into an upper seat stay 85, and a lower seat stay 185. The upper seat stay 85 may optionally have two upper seat stay tubes 75, 80, shown in FIG. 3. The lower seat stay 185 optionally includes two lower seat stay tubes 190, 195, as shown in FIGS. 3, 9 and 10. Attached to the lower seat stay 185 is a seat stay fastener receiver 215, which is sized to receive the seat stay fastener 210. In this way the lower seat stay 185 is releaseably coupled to the upper seat stay 85. Preferably, the seat stay fastener 210 is a quick-release type, but other suitable fasteners, or latches may be employed. Also, the arrangement of fastener to receiver may be switched.

As shown in FIGS. 3, 9 and 10, one feature of the present invention is that the bottom bracket is divided into a forward bottom bracket comprising two forward bottom bracket tubes 90, 95 and a rear bottom bracket comprising two rear bottom bracket tubes 200, 205. The tubes are pivotally connected by pivot 220. Rotatably coupled about the pivot 220 is a middle sprocket assembly 110. The middle sprocket assembly 110 is connected to the front sprocket 105 by a front chain 225 which runs from front sprocket 105 to a first middle sprocket 112 on the middle sprocket assembly 110 (as depicted in FIGS. 11 and 12). The rear chain 230 connects a second middle sprocket 114 to the rear hub 235 that can contain one or more sprockets 237 providing differing gear ratios.

In a preferred tandem bicycle embodiment, the diameter of the first sprocket 105 is the same as that of the first middle sprocket 112 and the diameter of the second middle sprocket 114 is greater than that of one or more of the sprockets 237 on the rear hub 235, although any sprocket size can be used that allows the pedal force generated at any of the pedal assemblies 100, 107 to the rear wheel 240.

In one embodiment of the present invention, the rear hub 23 5 may contain internal gears, or the rear hub 235 may include external gears and a derailleur to move the chain between the gears. In addition, the front sprocket 105 may include additional sprockets beyond the two sprockets 112, 114 in the illustrations. In this way, a variety of gear ratios may be provided. One feature of the present invention is that the two sprocket assemblies 105, 110 provide a gear ratio that may be suitable for most bicycle speed requirements. It should be noted that although chains 225 and 230 are discussed herein as providing mechanism for transmitting force between the respective sprockets 105, 110 and, or the hub mechanism 235 force can be transmitted via any mechanism that allows the forces to be appropriately transmitted from the rider's feet or hands to the appropriately driven wheel or wheels. For example, the force can be transmitted from pedals 100 or 107 via a drive shaft to rear wheel 240 or front wheel 175. Such a drive shaft system is widely known and used, for example in motorized vehicles to transmit propulsive force from an engine to one or more wheels. Alternatively, a power supply 65 may be included for providing a propulsive, force. The power supply 65 may comprise an electric or internal combustion motor, that in a preferred embodiment would not increase the folded dimensions of the foldable bicycle 10, or the tandem foldable bicycle 70.

Again referring to FIGS. 3, 9 and 10, the method of folding the rear wheel assembly 120 will now be described. When the seat stay fastener 210 is uncoupled from the seat stay fastener receiver 215, the rear wheel 240 is rotated about pivot 220, toward the seat 35. The front chain 225 remains positioned between the front sprocket 105 and the middle sprocket 110, while the rear chain 230 remains positioned between the middle sprocket 110 and the rear hub 235. The two rear bottom bracket tubes 200, 205 shift upward with the rear wheel 240. This arrangement of components keeps the distance between the front sprocket 105 and the middle sprocket 110 substantially constant during the folding process, avoiding any slack in the respective chains 225, 230. Therefore, it is not possible for the chains 225, 230 to come off during the folding and unfolding of the foldable bicycle 10. An alternative embodiment of the present invention may employ drivebelts, preferably geared drivebelts, instead of chains.

As shown in FIG. 4, when fully folded, the rear wheel 240 is positioned adjacent to the seat 35. A locking device may be used to keep the rear wheel 240 in the folded position. This greatly decreases the size of the foldable bicycle 10, allowing it to be carried in a large bag, backpack, and easily stowed in a small vehicle.

In addition, to reduce the width of the foldable bicycle 10, or the tandem foldable bicycle 70, the pedals may also be folded. Moreover, the foldable bicycle 10, or the tandem foldable bicycle 70 may be equipped with an electric or internal combustion motor without increasing the folded dimensions.

Any size wheel diameter can be used that allow the wheels to be appropriately folded using the frame assembly 12 provided. For example, both the front wheel 175 and the rear wheel 240 can be 14 inches or 16 inches in diameter, but other wheel sizes may be employed, such as for example 23 inches in diameter or other sizes. In addition, the foldable bicycle 10 and the tandem foldable bicycle 70 may be equipped with brakes, lights, fenders, a kick stand, and other amenities. Moreover, the frame may be sized to fit a child, or an oversized adult, or the top tube 15 may be positioned closer to the down tube(s) 20, such as traditionally has been provided on female gender-specific bicycles, as shown in FIG. 16.

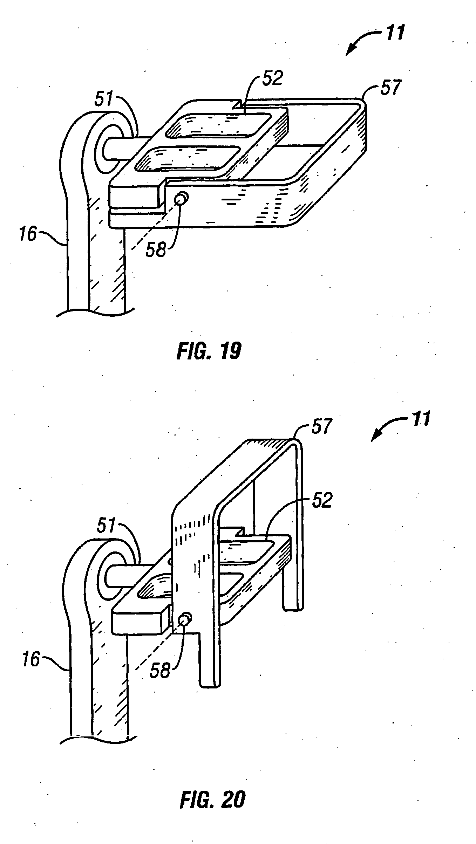

Referring now to FIGS. 19-20, a foldable pedal assembly 11 is illustrated. Attached to pedal cranks 16 is a pedal mount 51. A narrow pedal member 52 is coupled to the pedal mount 51. It will be appreciated that either the narrow pedal member 52, or the pedal mount 51 may rotate about the pedal cranks 16. An outer footrest 57 is pivotally coupled about pedal pivot axis 58, and when in the folded position, as shown in FIG. 20, substantially decreases the width of the foldable pedal assembly 11. When in the unfolded position, as shown in FIG. 19, the outer footrest 57, in conjunction with the narrow pedal member 52, provides a substantial area for receiving an operator's foot.

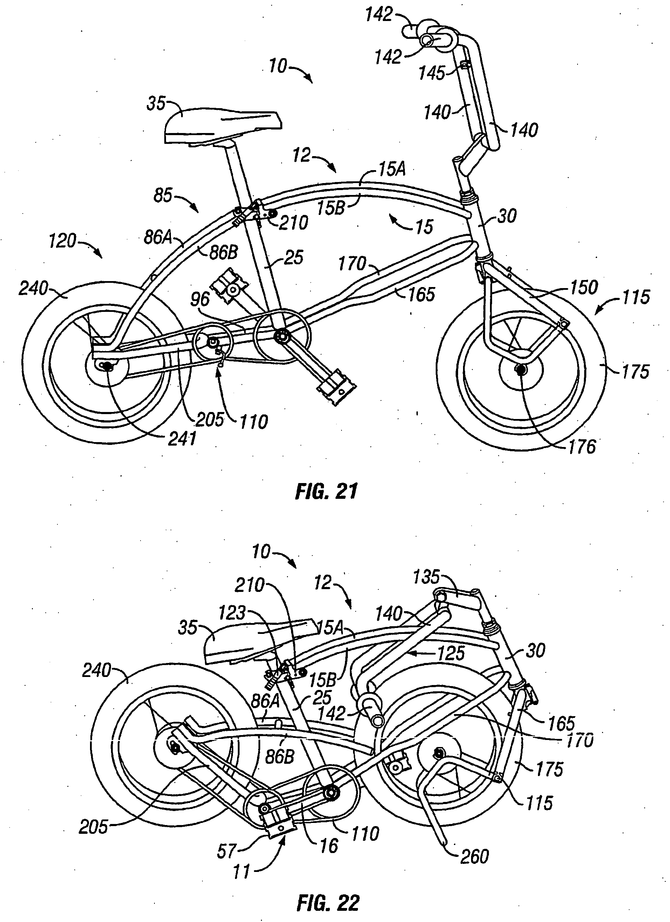

FIGS. 21-32 provide additional illustration of the embodiments of the present invention as already discussed above, with like reference numbers referring to like elements. FIG. 21 illustrates the foldable bicycle 10 according to another embodiment of the present invention. In this embodiment, downtubes 165, 170 are illustrated as being more widely spaced in one portion than in the other. For example, as illustrated, the gap between downtubes 165, 170 is wider at the front of the foldable bicycle 10 (i.e., nearer the bearing tube 30) than near the pedals. In this embodiment, front wheel 175 and corresponding axle 176 fit in the wider portion when the foldable front-fork assembly is in the folded position. Of course, alternatively, a generally uniform gap between the downtubes can be maintained so long as the gap is wide enough to accommodate at least a portion of the front wheel in the folded position, in an embodiment wherein the front wheel is positioned between downtubes. Alternatively, a single downtube is used, rather than double downtubes with a gap therebetween. In the single downtube embodiment, the front wheel is positioned along side the downtube in a folded configuration.

In an alternative embodiment, top tube 15 may be curved, as illustrated in FIG. 21. Seat stay 85 also optionally may be curved and aligned in such a manner to provide a substantially continuous arc from the bearing tube 30 to the rear bottom bracket tubes 200, 205. As can be seen in FIGS. 21, 22 and 24, in one embodiment, the seat stay tubes 86A and 86B are attached to respective rear bottom bracket tubes 200, 205 by respective portions that curve to be substantially parallel to the respective rear bottom bracket tube 200, 205. Any fastener can be used that provides sufficient strength to retain the tubes in a substantially fixed relation, such as welding, rivets, screws, adhesives, or combinations thereof. In one embodiment, the curve of the top tube 30 is sufficiently great so that the front wheel does not fully protrude beyond it. Alternatively, it can have a flatter arc, be substantially straight, or be curved downwards, to allow the front tube to protrude if desired. Likewise, in one embodiment, there is no top tube provided.

The top tube 15 optionally may include two spaced apart members 15A, 15B and the seat stay 85 may include two spaced apart seat stay members 86A, 86B. The top tube members 15A, 15B and seat stay members 86A, 86B optionally may be curved from front to rear as described above. It should be noted that although the terms "tube" or "tubes" are used in this description to describe various structural members of the bicycle 10, that any type of member of sufficient strength or other characteristics can be used - such as for example, solid members, beams of various cross-sectional profiles, or tubes (i.e., members defining an interior space). A fastener (or clamp) 210 is provided below the seat 35 that can releasably engage the seat stay 86, or seat stays 86A and 86B. In the unfolded position, the seat stay(s) are held in position by the fastener 210, and in the folded position, the fastener 210 is operated to release the seat stays 86 or 86A, 86B to allow the rear wheal to pivot into its folded position. Examples of a fastener 210 are illustrated in FIGS. 21-24, although any fastener providing sufficient clamping action to retain the seat stay(s) in a clamped or fixed relation with the seat tube may be used. In one embodiment a screw type of handle is provided to provide the engaging force for the fastener 210.

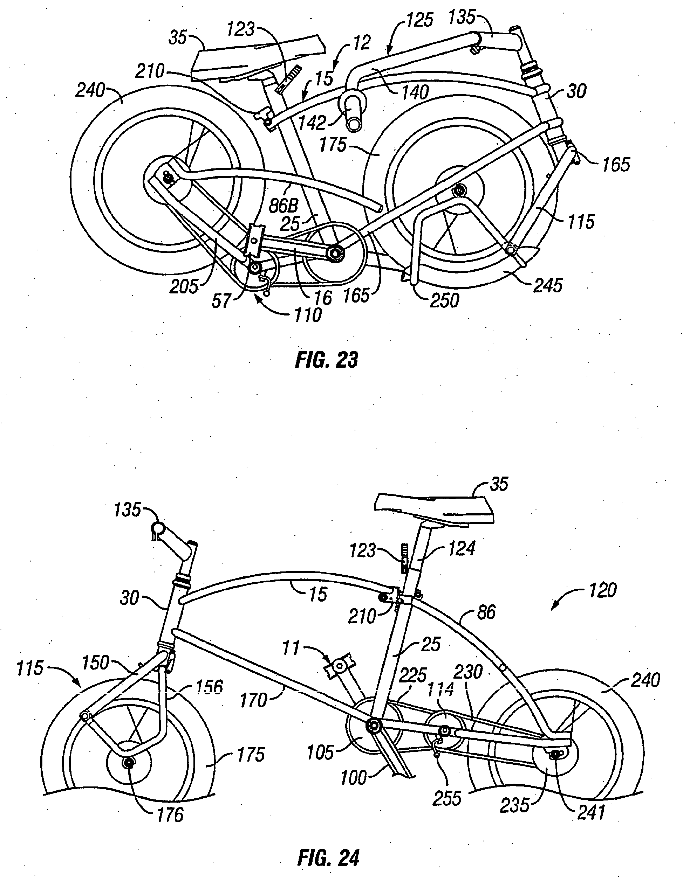

FIGS. 22 and 23 provide additional illustrations of embodiments of foldable bicycle 10 in a folded position. Folding the foldable bicycle 10 involves several steps not necessarily in the following order. As described previously, the foldable handlebar assembly 125 is rotatable about the bearing tube 30. Rotating the foldable handlebar assembly 125 also causes the foldable front-fork assembly 115 and front wheel 175 to rotate. The front-fork assembly 115 and accompanying front wheel 175 are rotated towards the downtube assembly, which includes downtube members 165, 170 such that at least a portion of the front wheel 175 is positioned within the gap between members 165, 170. In one embodiment, a single downtube is used and in the folded configuration, the wheel 175 is positioned adjacent the downtube. In one embodiment, a split top tube is used and at least a portion of the wheel extends into the gap between the top tubes 15A and 15B. The foldable handlebar assembly 125 can be folded by releasing the handlebar latch 145 that enables the handles, 142 to pivot downwardly and nearer each other. The handlebars 140 each are positioned on an outer side of the top tube 15. Because the handlebar elements 140 are folded inwardly, the handles 142 are angled toward the core frame assembly 12 of the foldable bicycle 10. By rotating and folding the foldable handlebar assembly 125, a length and width of the foldable bicycle 10 is reduced thereby decreasing an amount of space needed to store the foldable bicycle 10. The seat stay fastener 210 releases the seat stays allowing the rear wheel 240 to rotate toward the seat 35. In the embodiment including a middle sprocket assembly 110, the rear wheel 240 rotates about the axis of middle sprocket assembly. Optionally, the seat stays 86A, 86B thus extend beyond the seat tube 25 into the region of the core frame assembly 12. The foldable pedal assembly 11 may also be folded to reduce a width of the foldable bicycle 10. The seat 35 may be released and lowered as well.

A front fender 245 optionally can be provided, and the front fender 245 optionally may include a fender stand 250. The fender stand 250 helps to maintain the foldable bicycle 10 is an upright position when in the folded position. The fender stand 250 may be used in combination with a frame stand described in further detail below. Optionally the front fork assembly 115 may be sized to have at least one protrusion 260 extending beyond the circumference of the wheel, and functioning as a stand in the folded configuration - instead of or in addition to the fender stand 250.

Optionally, a frame stand 255 is provided to assist in maintaining a folded bicycle 10 in an upright position. Optionally, it may be attached to a portion of one or both of the forward bottom bracket tubes 90, 95, or in embodiments in which a single forward bottom bracket tube 96 is used, the frame stand optionally may be attached to a portion of it. However, it can be attached at any suitable location where it can assist in maintaining a folded bicycle 10 upright. Optionally, both the frame stand 255 or fender stand 250 and/or fork assembly protrusion 260 as described above may be used in combinations.

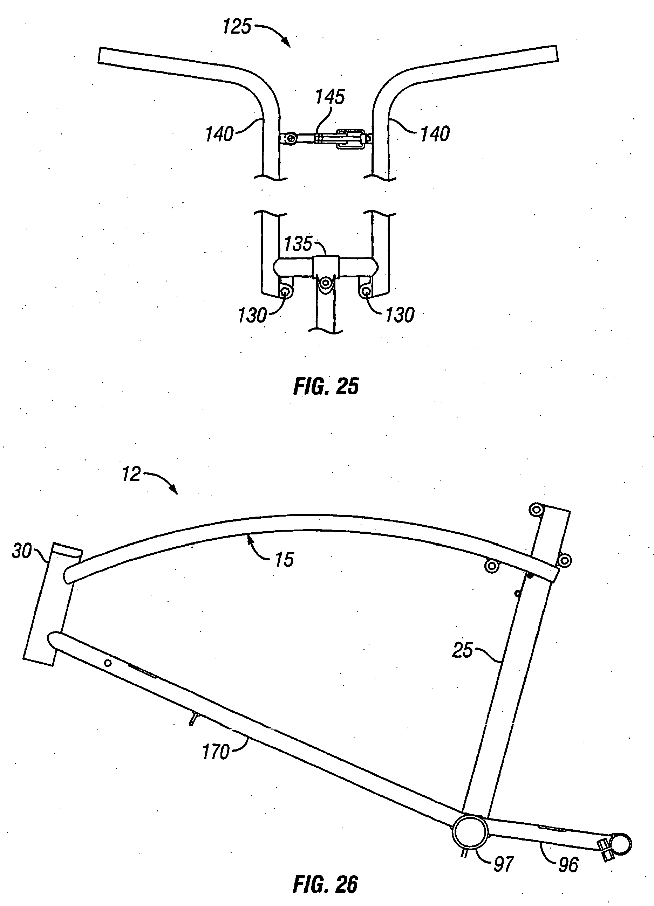

FIGS. 26-28 illustrate a core frame assembly 12 of an embodiment of the foldable bicycle 10. Also shown is a seat lock 123 that locks a seat post in a desired position. The downtubes 165, 170 in this embodiment are bowed toward the front of the foldable bicycle 10, accommodating front wheel 175 when in the folded position. In this example, the down tubes 165, 170 are also narrower in diameter extending from the end of the bowed portion until almost to the seat stay, and optionally are "D" shaped.

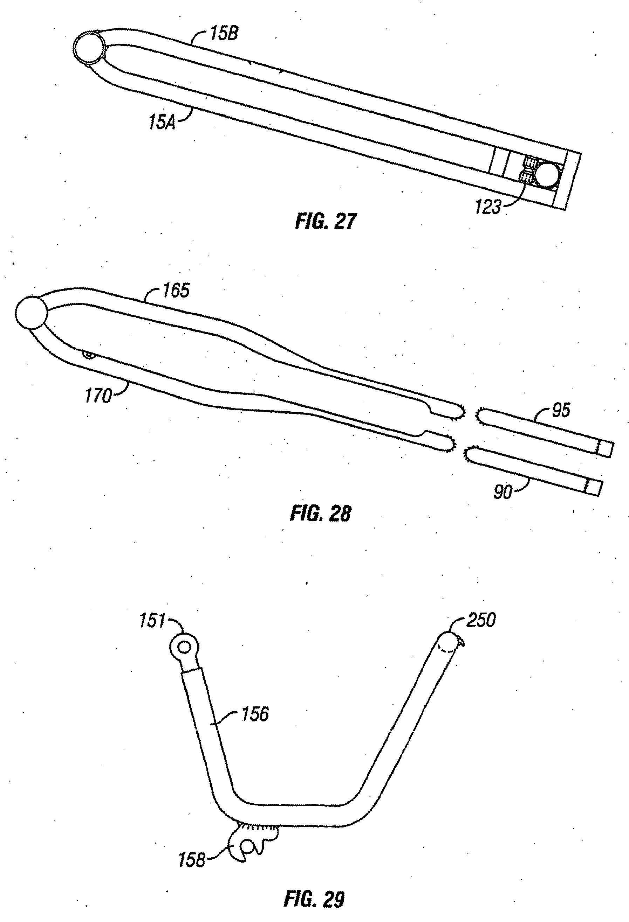

FIG. 29 illustrates one example of front-fork assembly 115. Although the curved portion 156 is shown as having rounded corners, it should be recognized that any arrangement providing sufficient strength and riding characteristics can be used. In the illustrated embodiment, the curved portion 156 and the fork member 150 are pivotally connected at coupling end 151. It should be appreciated that other constructions of the front-fork assembly 115 are possible which provide a pivotal connection between the front fork member 150 and a coupling member 156 between the front fork and front wheel connector - such as strut 155. In the illustrated embodiment, a front fork wheel 158 is provided on curved portion 156.

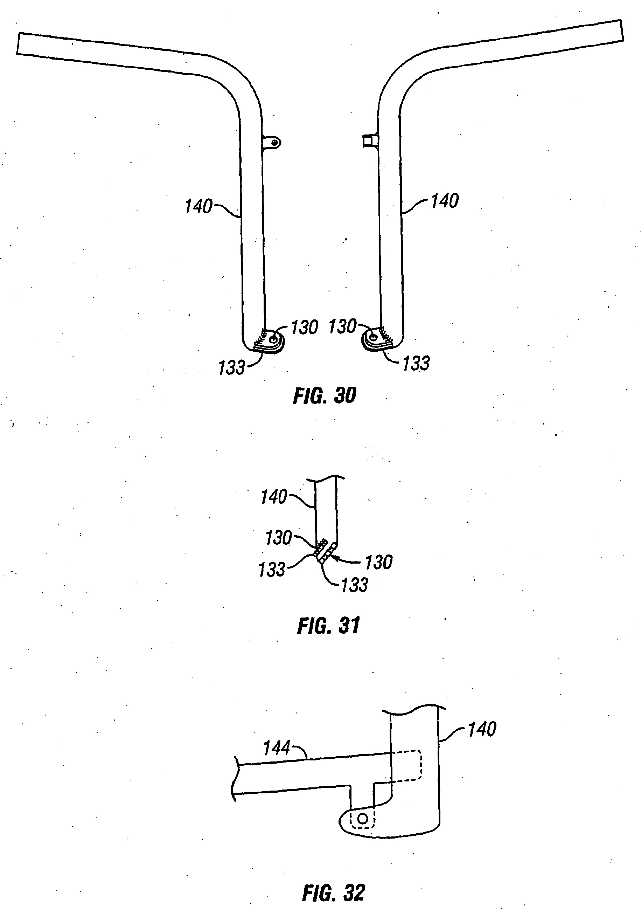

FIGS. 30-32 provide detail of the handlebars 140. Angled linkages 133 provide an example of a linkage assembly for linking the handlebars 140 with the mounting member 135. As the handlebars 140 are released, they are rotatable downwardly and ultimately towards the interior of the frame core section 12 by pivoting about the pivot points 130.

According to one embodiment of the present invention, the ratios of distances between and among various locations on the foldable bicycle fall within ranges of desired ratios, such as to provide desired handling, size and riding characteristics. In an embodiment, the ratios of such distances are selected so as to enhance stability, handling and riding characteristics of the foldable bicycle 10 when in the riding position. Sizes of various components, such as, for example, the top tube(s) 15, 15A, 15B, downtube(s) 20, 165, 170, seat tube 25, seat stays 85, forward bottom brackets 90, 95, 96 or rear bottom brackets 200, 205 may be varied, to accommodate various desired bicycle configurations and riding characteristics.

In order to illustrate desired ratios, the following points will be used for discussion:
**A** Pedal axle 97
**B** Front wheel axle 176
**C** Rear wheel axle 241
**D** Top of seat tube 25
**E** Seat 35
**F** Location 153 at which the front fork 150 is connected to bearing tube 30
**G** Handle 142
**H** Pivot in middle sprocket assembly 110
**X** Ground level

It should be noted that although various ratios, dimensions and ratio ranges may be provided herein, these are intended only as examples of the invention, and not limitations on particular dimensions or ratios. It should be understood that ratios outside of the ranges of the examples provided herein also can be practiced. Examples of suitable ratio ranges are as follows: ratio of distances A to B and A to C is in a range of 0.67 to 2.01; ratio of distances A to B and B to F in the range of 0.9 to 2.72; ratio of distances A to B and A to F is in the range of 0.54 to 1.64; ratio of distances A to F and B to F is in the range of 83 to 2.49; and the ratio of distances A to H and H to C is in the range of 0.50 to 1.5.

One example of the present invention is provided by way of TABLE 1 below. In TABLE 1, the top row and left columns correspond to particular points on the bicycle (or the ground) as listed above. The distances between the points are provided at the intersections of the given row / column. Where the same point is at the intersection, a dot (•) is used to indicate no distance measurement. Although the units for this chart are centimeters, it should be understood that other units may be used and the example is provided to provide relative distances for the purpose of determining ratios. It also should be noted that these distances are provided only as one of numerous possible examples of how the invention can be practiced and that the ratios among the distances can be varied as much as 50% or more. Although examples of ranges of rations among the distances are provided above, other ratios and ratio ranges that characterize the folding bicycle of the present invention can be derived by selecting any combination of distances provided in TABLE 1, determining ratios between the selected distances and selecting a ration range that runs from one-half the ratio to one and one-half times the ratio. In addition, the distances can be scaled up and down to accommodate different size bicycles.

**TABLE 1**

| | | | | | | | | | |
|---|---|---|---|---|---|---|---|---|---|
| | **A** | **B** | **C** | **D** | **E** | **F** | **G** | **H** | **X** |
| **A** | • | 59 | 44 | 35 | 63 | 54 | 85 | 22 | 27.5 |
| **B** | 59 | • | 102 | 80 | 101 | 32.5 | 87 | 80 | 20 |
| **C** | 44 | 102 | • | 52 | 72 | 97 | 117 | 22 | 20 |
| **D** | 35 | 80 | 52 | • | 28 | 60 | 66 | 40 | 61 |
| **E** | 63 | 101 | 72 | 28 | • | 76 | 56 | 66 | 87 |
| **F** | 54 | 32.5 | 97 | 60 | 76 | • | 57 | 75 | 50 |
| **G** | 85 | 87 | 117 | 66 | 56 | 57 | • | 95 | 100 |
| **H** | 22 | 80 | 22 | 40 | 66 | 75 | 95 | • | 23 |
| **X** | 27.5 | 20 | 20 | 61 | 87 | 50 | 100 | 23 | • |

Thus, it is seen that a foldable bicycle is provided. One skilled in the art will appreciate that the present invention can be practiced by other than the above-described embodiments, which are presented in this description for purposes of illustration and not of limitation. The description and examples set forth in this specification and associated drawings only set forth embodiment(s) of the present invention. The specification and drawings are not intended to limit the exclusionary scope of this patent document. Many designs other than the above-described embodiments will fall within the literal and/or legal scope of the following claims, and the present invention is limited only by the claims that follow. It is noted that various equivalents for the particular embodiments discussed in this description may practice the invention as well.

## Claims

1. A folding bicycle having a seat tube [25], a bearing tube [30], a front bottom bracket [90; 95], a rear bottom bracket [200; 205], a pedal axle [97], a middle sprocket assembly [110] defining a pivot location, the middle sprocket assembly [110] being located between the front and rear bottom bracket [90, 200; 95, 205], and a rear wheel axle [241],
a ratio of the distance between the pedal axle and the pivot location of the middle sprocket assembly and the distance between the pivot location and the rear wheel axle being substantially between 0.50 and 1.5,
**characterized in that** the pedal axle [97] is located at and below the bottom of the seat tube.

2. The folding bicycle of claim 1, wherein a ratio of the distance between the pedal axle and a front wheel axle [176], and the distance between the pedal axle and the rear wheel axle is substantially between 0.67 and 2.01.

3. The folding bicycle of any of claims 1 or 2, wherein a ratio of the distance between the pedal axle and a front wheel axle and the distance between the pedal axle and a location at which a front fork tube [150] is connected to a bearing tube is substantially between 0.54 and 1.64.

4. The folding bicycle of any of claims 1 or 2, wherein a ratio of the distance between the pedal axle and a front wheel axle and the distance between the front wheel axle and a location at which a front fork tube is connected to a bearing tube is substantially between 0.9 and 2.72.

5. The folding bicycle of any of claims 1 or 2, wherein a ratio of the distance between the pedal axle and a location at which a front fork tube is connected to a bearing tube and the distance between the front wheel axle and the location at which the front fork tube is connected to the bearing tube is substantially between 0.83 and 2.49.

6. The folding bicycle of any of claims 1 to 5, wherein the ratio of the distance from the pedal axle to the front wheel axle and distance from the pedal axle to the rear wheel axle is about 1.34.

7. The folding bicycle of any of claims 1 to 6, wherein a ratio of the distance between the pedal axle and the pivot location of the middle sprocket assembly and the distance between the pivot location and the rear wheel axle is about 1.0.

8. The folding bicycle of any of claims 1 to 7 further comprising:
a foldable fork assembly [115] including:
a front fork member [150];
a curved portion having an attachment location pivotally connected to an end of the front fork member and the curved portion is configured to be removably attached to a front wheel [175] of the bicycle at an intermediate location along the curved portion.

9. The folding bicycle of any of claims 1 to 8, further comprising a top tube assembly [15, 15A or 15B] including two members that are spatially separated for at least a portion of their length.

10. A method of folding the foldable bicycle of any of claims 8 or 9 comprising:
uncoupling an end of the curved portion from the front fork member, and
pivoting the front wheel [175] about an axis located at a junction of the front fork member and the curved member.

11. The method of claim 10, further comprising:
inserting at least a portion of the front wheel in between spatially separated members of the a down tube assembly [20, 165 or 170].

12. The method of any of claims 10 or 11 further comprising:
uncoupling seat stays [75, 80, 85, 86A, 86B, 190 or 195] of the foldable bicycle from a clamp [210]; and
pivoting a rear wheel [240] about an axis defined by an intermediate axis of rotation located between and aligned with a pedal axle [97] and a rear wheel axle [241] in a riding configuration.

## Patentansprüche

1. Ein Klappfahrrad mit einem Sitzrohr [25], einem Lagerrohr [30], einem Vorderrad-Tretlager [90; 95], einem Hinterrad-Tretlager [200; 205], einer Pedalachse [97], einer mittleren Zahnkranzanordnung [110], die einen Drehpunkt definiert, und einer Hinterradachse [241]. Die mittlere Zahnkranzanordnung [110] befindet sich zwischen dem Vorderrad- und dem Hinterrad-Tretlager [90, 200; 95, 205].
Das Verhältnis der Distanz zwischen der Pedalachse und dem Drehpunkt der mittleren Zahnkranzanordnung zu der Distanz zwischen dem Drehpunkt und der Hinterradachse beträgt im Wesentlichen zwischen 0,50 und 1,5,
wobei sich die Pedalachse [97] am und unter dem unteren Ende des Sitzrohres befindet.

2. Das Klappfahrrad nach Anspruch 1, wobei das Verhältnis der Distanz zwischen der Pedalachse und einer Vorderradachse [176] zu der Distanz zwischen der Pedalachse und der Hinterradachse im Wesentlichen zwischen 0,67 und 2,01 beträgt.

3. Das Klappfahrrad nach einem der beiden Ansprüche 1 oder 2, wobei das Verhältnis der Distanz zwischen der Pedalachse und einer Vorderradachse zu der Distanz zwischen der Pedalachse und der Stelle, an der ein vorderes Gabelrohr [150] mit einem Lagerrohr verbunden ist, im Wesentlichen zwischen 0,54 und 1,64 beträgt.

4. Das Klappfahrrad nach einem der beiden Ansprüche 1 oder 2, wobei das Verhältnis der Distanz zwischen der Pedalachse und einer Vorderradachse zu der Distanz zwischen der Vorderradachse und der Stelle, an der ein vorderes Gabelrohr mit einem Lagerrohr verbunden ist, im Wesentlichen zwischen 0,9 und 2,72 beträgt.

5. Das Klappfahrrad nach einem der beiden Ansprüche 1 oder 2, wobei das Verhältnis der Distanz zwischen der Pedalachse und der Stelle, an der ein vorderes Gabelrohr mit einem Lagerrohr verbunden ist, zu der Distanz zwischen der Vorderradachse und der Stelle, an der das vordere Gabelrohr mit dem Lagerrohr verbunden ist, im Wesentlichen zwischen 0,83 und 2,49 beträgt.

6. Das Klappfahrrad nach einem der Ansprüche 1 bis 5, wobei das Verhältnis der Distanz zwischen der Pedalachse und der Vorderradachse zu der Distanz zwischen der Pedalachse und der Hinterradachse ca. 1,34 beträgt.

7. Das Klappfahrrad nach einem der Ansprüche 1 bis 6, wobei das Verhältnis der Distanz zwischen der Pedalachse und dem Drehpunkt der mittleren Zahnkranzanordnung zu der Distanz zwischen dem Drehpunkt und der Hinterradachse ca. 1,0 beträgt.

8. Das Klappfahrrad nach einem der Ansprüche 1 bis 7, das des Weiteren **gekennzeichnet ist durch**:
eine klappbare Gabelanordnung [115] mit:
einem vorderen Gabelholm [150];
einen gebogenen Teilbereich mit einer Befestigungsstelle, die mit einem Ende des vorderen Gabelholms angelenkt ist. Der gebogene Teilbereich ist so gestaltet, dass er an ein Vorderrad [175] des Fahrrads an einer Stelle des gebogenen Teilbereichs lösbar angebracht ist.

9. Das Klappfahrrad nach einem der Ansprüche 1 bis 8, das des Weiteren durch eine Oberrohranordnung [15, 15A oder 15B] mit zwei Holmen, die durch mindestens einen Teil ihrer Länge räumlich voneinander getrennt sind, **gekennzeichnet** ist.

10. Eine Methode, das Klappfahrrad nach einem der Ansprüche 8 oder 9 zusammenzuklappen, **dadurch gekennzeichnet dass**:
ein Ende des gebogenen Teilbereichs vom vorderen Gabelholm losgelöst werden kann; und das Vorderrad [175] schwenkbeweglich um eine Achse bewegt werden kann, die sich an einer Verbindungsstelle des vorderen Gabelholms und des gebogenen Holms befindet.

11. Die Methode nach Anspruch 10, des Weiteren **dadurch gekennzeichnet, dass**:
mindestens ein Teil des Vorderrads zwischen die räumlich getrennten Holme der Unterrohranordnung eingeschoben werden kann [20, 165 oder 170].

12. Die Methode nach einem der Ansprüche 10 oder 11, des Weiteren **dadurch gekennzeichnet, dass**:
die Sitzstreben [75, 80, 85, 86A, 86B, 190 oder 195] des Klappfahrrads von einer Klammer [210] losgelöst werden können; und dass
in ausgeklapptem Zustand ein Hinterrad [240] schwenkbeweglich um eine Achse bewegt werden kann, die durch eine dazwischenliegende Drehachse definiert ist, die sich zwischen und ausgerichtet an einer Pedalachse [97] und einer Hinterradachse [241] befindet.

## Revendications

1. Un vélo pliant qui a un tube de selle [25], un tube de direction [30], une base avant [90,95], une base arrière [200,205], un axe de pédalier [97], un assemblage pignon central [110] définissant un emplacement de pivot, l'assemblage pignon central [110] étant positionné entre la base avant et la base arrière, [90,200,95,205], et un axe de roue arrière [241],
un ratio de la distance entre l'axe de pédalier et l'emplacement du pivot de l'assemblage pignon central et la distance entre l'emplacement de pivot et l'axe de la roue arrière étant substantiellement entre 0,50 et 1,5,
**caractérisé par le fait que** l'axe de pédalier [97] est situé au, et, sous le bas du tube de selle.

2. Le vélo pliant de la revendication 1, en quoi un ratio de la distance entre l'axe de pédalier et un axe de la roue avant [176], et la distance entre l'axe de pédalier et l'axe de la roue arrière est substantiellement entre 0,67 et 2,01.

3. Le vélo pliant des revendications 1 ou 2, en quoi un ratio de la distance entre l'axe de pédalier et un axe de la roue avant et la distance entre l'axe de pédalier et un emplacement où une fourche avant [150] est reliée à un tube de direction est substantiellement entre 0,54 et 1,64.

4. Le vélo pliant des revendications 1 ou 2, en quoi un ratio de la distance entre l'axe de pédalier et un axe de la roue avant et la distance entre l'axe de la roue avant et un emplacement où une fourche avant est reliée à un tube de direction est substantiellement entre 0,9 et 2,72.

5. Le vélo pliant des revendications 1 ou 2, en quoi un ratio de la distance entre l'axe de pédalier et un emplacement où la fourche avant est reliée à un tube de direction et la distance entre l'axe de la roue avant et l'emplacement où la fourche avant est relié au tube de direction est substantiellement entre 0,83 et 2,49.

6. Le vélo pliant des revendications 1 à 5, en quoi un ratio de la distance de l'axe de pédalier à l'axe de la roue avant et la distance de l'axe de pédalier à l'axe de la roue arrière est environ 1,34.

7. Le vélo pliant des revendications 1 à 6, en quoi un ratio de la distance entre l'axe de pédalier et l'emplacement de pivot de l'assemblage pignon central et la distance entre l'emplacement de pivot et l'axe de la roue arrière est d'environ 1,0.

8. Le vélo pliant des revendications 1 à 7 comprend aussi :
un assemblage de fourche avant [115] incluant :
un longeron de fourche avant [150] ;
une portion courbée ayant une attache reliée par un pivot à une fin du longeron de la fourche avant et la portion courbée est configurée pour être attachée de façon amovible à la roue avant [175] du vélo à un emplacement intermédiaire le long de la portion courbée.

9. Le vélo pliant des revendications 1 à 8, comprend aussi un assemblage du tube horizontal [15, 15A ou 15B] incluant deux longerons écartés pour au moins une portion de la longueur.

10. Une méthode pour plier le vélo pliant des revendications 8 ou 9 comprenant :
dételage d'une extrémité de la portion courbée du longeron de la fourche avant, et
pivotant la roue avant [175] sur un axe à partir de la jonction du longeron de la fourche avant et du longeron courbé.

11. La méthode de la revendication 10, comprend aussi :
insérant au moins une portion de la roue avant entre les longerons écartés de l'assemblage du tube diagonal [20,165 ou 170].

12. La méthode des revendications 10 ou 11 comprend aussi :
détachement du siège reste [75, 80, 85, 86A, 86B, 190 ou 195] sur le vélo pliant à partir d'un crampon [210] ; et pivotant la roue arrière [240] selon un axe défini par un axe de rotation intermédiaire située et alignée avec un axe de pédalier [97] et un axe de la roue arrière [241] dans la configuration de promenade.
